# EUROPEAN PATENT APPLICATION

(11) **EP 3 620 406 A1**
(43) Date of publication of application: **11.03.2020**
(21) Application number: 19195495.7
(22) Date of filing: 05.09.2019
(51) Int. Cl.: B65G 1/04, B65G 1/06, B66F 9/18

(54) **A CART, A HANDLING UNIT AND A STORAGE UNIT FOR HOUSING DIFFERENT PRODUCTS**

(30) Priority: 06.09.2018 IT 201800008394
(71) Applicant: S.I.C.M.A. S.p.A. SOCIETA' INDUSTRIALE COSTRUZIONI MECCANICHE E AFFINI, 12084 Mondovi (IT)
(72) Inventor: BERTOLINO, Michele, 12080 VICOFORTE (CN) (IT)
(74) Representative: Bergadano, Mirko

(57) **Abstract**

In a storage (1) adapted to equally house reels (3) of tape material and pallets with a supporting platform (5), a transfer unit (25) is used, the unit being provided with a cart (32) with motorised wheels, wherein a picking and support assembly (40) is configured equally to pick and support at least one reel (3) with a horizontal axis or at least a pallet with a supporting platform (5); the picking assembly (40) having two forks (46) adapted to being coupled to the platform (5) and a cradle (53) with a horizontal axis adapted to partially receive the reel (3) and arranged in a lowered position between the two forks (46); a motorised guide and slide assembly (42) being provided to vertically translate the cradle (53) in unison with the forks (46).

## Description

### CROSS-REFERENCE TO RELATED APPLICATIONS

This patent application claims priority from Italian patent application no. 102018000008394 filed on 06/09/2018.

### TECHNICAL FIELD

The present invention relates to a cart, a handling unit and a storage unit for housing different products.

In particular, the present invention relates to a cart, a handling unit and a storage unit for handling and storing paper material products, in particular, reels of paper and pallets of sheets of paper, to which the following discussion will make explicit reference without loss of generality.

### BACKGROUND ART

In the field of producing paper material, the formation of a paper tape is known, which, in some cases, is wound onto cores to form reels of paper and, in other cases, is cut to form sheets of paper, which are then stacked to form reams, or packs of paper, which are subsequently arranged on supporting platforms, also known as pallets, to form pallets of paper material.

Both in paper production plants and processing plants, the reels and pallets of paper are stored in different vertical storage shelves, which are separate from one another.

In particular, for storing the pallets of paper, each shelf has a simple flat supporting surface, while cradle housings are provided for reels, wherein the reels themselves are supported with the axis thereof arranged horizontally.

Clearly, the equipment associated with storage shelves for moving pallets is also different from the equipment used for moving reels. For example, the pallets are moved from and to a loading/unloading area in the storage unit, or inside the storage unit itself, by means of lifting and transport shuttles, which are movable along tracks provided on the shelves, they are inserted below the pallet to be moved, they lift, spacing it apart from the supporting surface and they transfer it.

On the other hand, carts are used to move the reels, the carts having picking members on board, which are selected on a case-by-case basis and measured according to the diameter, width and weight of the reels to be moved.

The use of storage units, shuttles and handling carts, which differ considerably from one another, requires, on the one hand, the availability of extensive areas over which the different storage units can be elevated and entails, on the other, elevated production and management costs, which increase as the quantity of products to be stored and handled increases.

In some cases, the reels are stored in the same storage units as the pallets. In order to do this, first the reels are overturned and arranged on the axis thereof in a vertical position and then they are laid on a platform similar to those of the pallets and the reel-platform assembly is moved in the same way as the pallets.

Such a storage method is unsatisfactory because, on the one hand, the length of the vertically-placed reel limits the capacity for vertical storage, guaranteeing few vertical steps, and the platform itself and the relative thickness are a waste of space. Besides this, such a method requires the availability of an elevated number of platforms with elevated costs both for purchasing and managing the platforms themselves. In fact, after unloading the reels in the dispatch area, the platforms must return to the reel loading area or they must be arranged in temporary waiting storage units.

In any case, the platforms inevitably take up a part of the useful space in the storage unit, reducing such space to the detriment of the quantity of reels stored.

### DISCLOSURE OF INVENTION

One purpose of the present invention is to produce a product handling cart, which allows the drawbacks presented above to be overcome in a simple and inexpensive manner.

According to the present invention, a motorised cart for handling products is produced; the cart having a horizontal longitudinal axis and comprising a frame, two rows of wheels coupled to the frame on opposite lateral sides of said longitudinal axis for rotating on a rolling surface and picking and support means for said products, characterised in that said picking and support means are equally configured to pick and support at least one reel of tape material, arranged with a horizontal axis thereof, or at least one supporting platform and comprise two forks arranged parallel to, and on opposite lateral sides of said longitudinal axis and delimited at the top by first mobile supporting surfaces of said platform and a cradle having an axis parallel to said longitudinal axis and arranged between said two forks in a lowered position with respect to the forks; said cradle having a second mobile supporting surface for said reel of tape material, said second mobile supporting surface being arranged in a lowered position with respect to said first mobile supporting surfaces; a motorised guide and slide assembly being interposed between said frame, said forks and said cradle for vertically translating and, in opposite directions, said forks and said cradle with respect to said wheels between a raised transport position and a lowered picking/releasing position.

The present invention further relates to a unit for the transfer of articles and to a storage unit provided with such a transfer unit.

According to the present invention a unit for transferring articles is produced, as claimed in claim 6.

According to the present invention, a storage unit is also produced, as claimed in claim 10.

### BRIEF DESCRIPTION OF THE DRAWINGS

The invention will now be described with reference to the accompanying drawings, that show a non-limiting embodiment thereof, wherein:
Figure 1 is a schematic perspective view with parts removed for clarity, of a storage unit for storing products and a unit for loading/unloading and handling products produced according to the dictates of the present invention; and

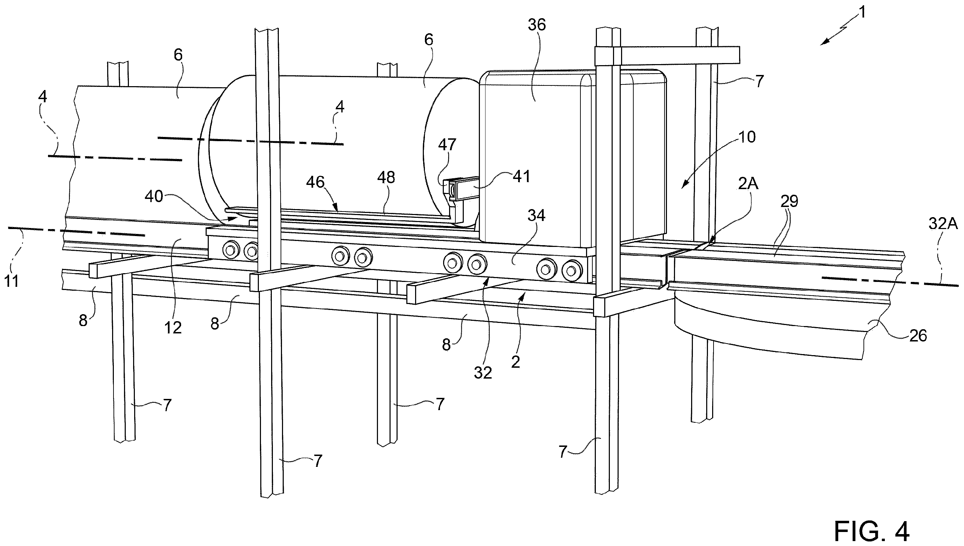

Figures 2, 3 and 4 partially show the storage unit in Figure 1 with the unit arranged in three different functional states; and
Figure 5 shows a perspective view, on an enlarged scale, of a detail in Figure 1.

### BEST MODE FOR CARRYING OUT THE INVENTION

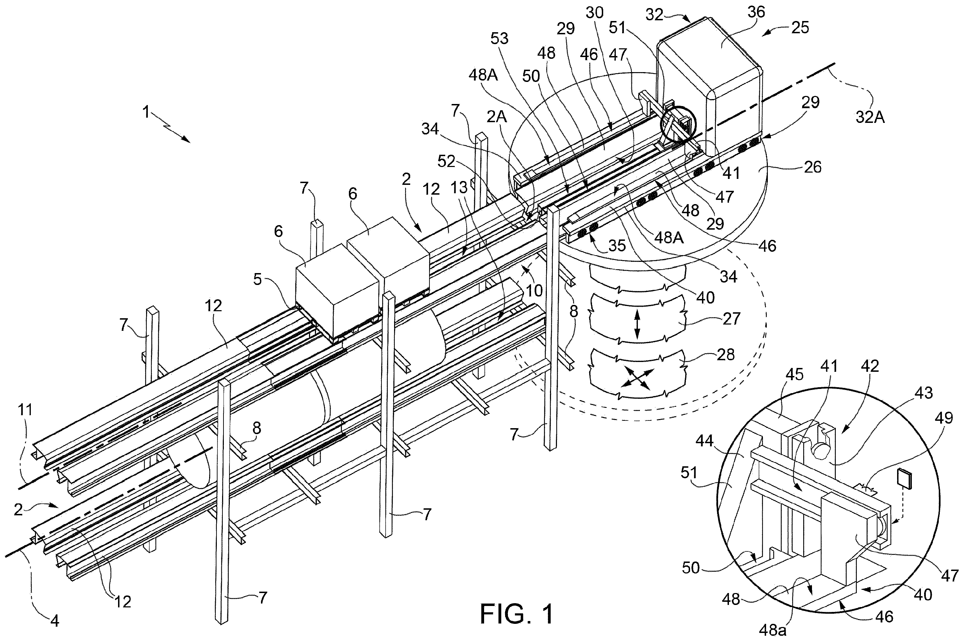

A vertical storage unit is globally denoted in Figure 1 by the number 1, the unit having a plurality of shelves 2 equally for storing reels 3 of a tape material, for example, paper, arranged with a horizontal axis 4 thereof and supporting platforms 5, commonly known as pallets, supporting, for example, packs or reams of paper.

The storage unit 1 comprises a plurality of uprights 7 firmly connected to one another by crossbeams 8. The storage unit 1 further comprises, for each shelf 2, a track 10, which rests on, and is firmly connected to the crossbeams 8, has a longitudinal axis 11 and is configured to support the platforms 5 and the reels 3 directly, i.e. without elements for interfacing/supporting the reels 3 themselves.

In particular, each track 10 comprises two horizontal and parallel shaped beams 12 arranged specularly with respect to the longitudinal axis 11.

The beams 12, which are fixed with respect to the uprights 7 and the crossbeams 8, are arranged in mutually spaced positions, delimiting, between them, a central longitudinal channel 13.

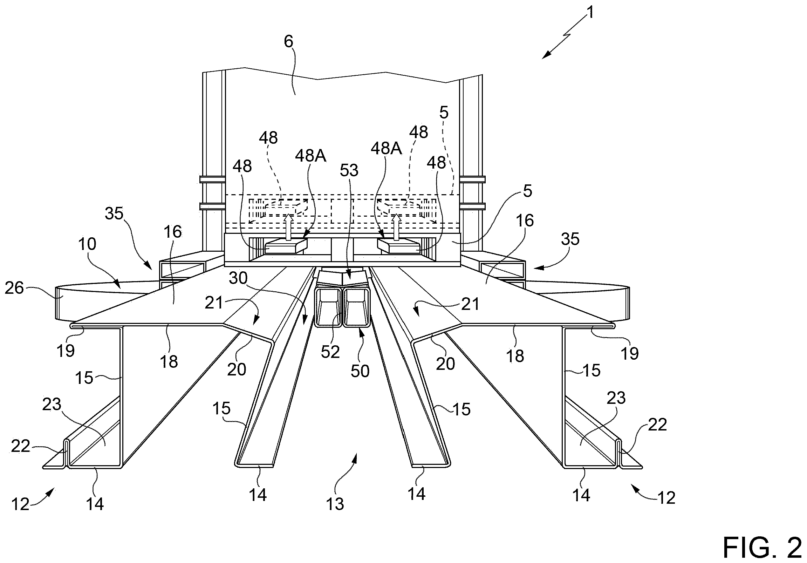

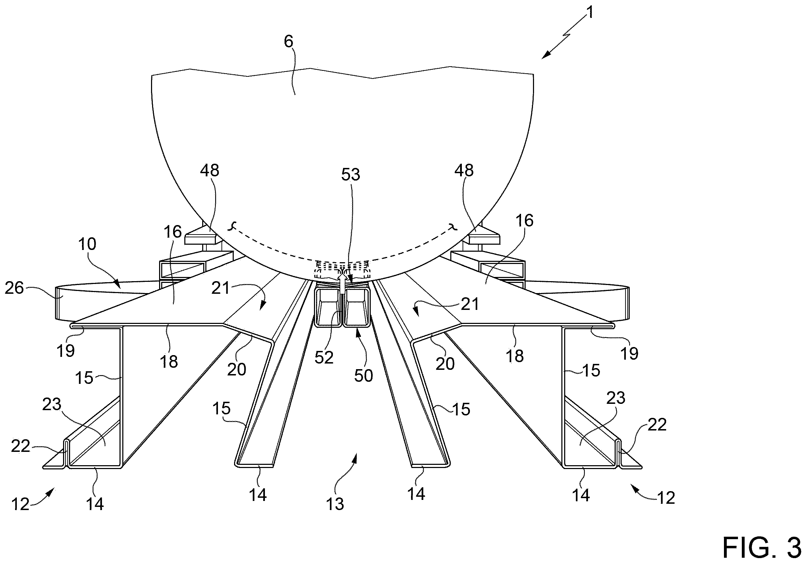

The beams 12 are geometrically and dimensionally equal to one another. Conveniently, each of the beams 12 is defined by a hollow profiled body and has a section orthogonal to the axis 11, which is portal-shaped and identical to the section of the other beam 12, as can be seen in Figures 2 and 3.

Again, with reference to Figures 2 and 3, each beam 12 comprises a relative horizontal supporting wall 14 on the crossbeams 8, two walls or uprights 15 extending upwards, each, from a relative supporting wall 14, and a horizontal upper supporting wall 16. Each supporting wall 16 comprises a flat intermediate portion 18 and two lateral portions 19 and 20, of which the portion 19 extends in a cantilever fashion beyond the relative wall 15. On the other hand, each of the portions 20 is an inclined flat portion, which extends downwards and towards the relative wall 15, to which it is firmly connected.

The portions 18 and 19 define a supporting plane for the platforms 5, while the portions 20 define a fixed cradle 21 adapted to partially house the reels 3.

Again, with reference to Figures 2 and 3, each beam 12 also comprises a relative flap 22, which extends upwards from the relative wall 14 to define a guide channel 23, together with the wall 15 and the relative portion 19, which will be described better below.

Again, with reference to Figure 1, the storage unit 1 further comprises a motorised unit 25 equally adapted to pick/deposit and transfer the reels 3 and the platforms 6 from and to the entrances 2A of the various shelves 2 and inside the shelves 2 themselves.

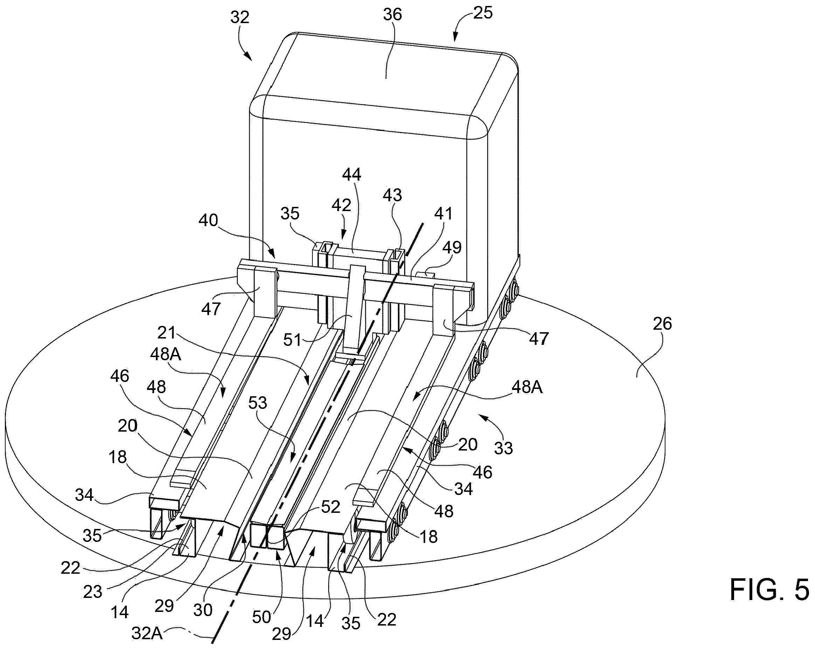

To this end, with reference to Figure 5, the unit 25 comprises a horizontal platform 26, a stacker crane assembly 27 (Figure 1), known in itself and not described, for vertically translating the platform 26 and bringing it level with each of the entrances 2A and a movement unit 28 also known in itself, which is interposed, for example, between the assembly 27 and a supporting plane for moving the platform 26 in two horizontal directions orthogonal to each other. According to one variation, the assembly 27 is also configured to rotate the platform 26 about a vertical axis.

The unit 25 also comprises two supporting elongated bodies 29, each of which is formed by a piece of the above-mentioned beams 12. Thus, the various parts of each piece are numbered with the same reference numerals as the corresponding parts of the beams.

The bodies 29 are firmly connected to the platform 26 and arranged at a distance from one another measured orthogonally to the axis 11 equal to the distance between the beams 12 measured in the same direction. In this way, for each shelf 2, the bodies 29 form an extension of the relative beam 12 and together an extension of the relative track 10. The bodies 29 delimit, between one another, a central channel 30 thereof, which defines an extension of the channel 13, as can be seen from Figure 1.

Again with reference to Figure 1 and, in particular, to Figure 5, the unit 25 also comprises a motorised cart 32, which has an axis 32A thereof that is parallel to the axis 11 and comprises a frame 33, in turn, comprising two sides or arms 34 arranged on opposite lateral sides of the axis 32A and the bodies 29, each carrying a relative row 35 of motorised wheels of the cart 32. The wheels of each row 35 rotate inside a relative channel 23 defined by the relative body 29.

The frame 33 also comprises a head portion 36 firmly connected to the sides 34 and extending like a bridge between terminal sections of the sides 34 and above the bodies 29 so as not to interfere with the bodies 29 themselves during the movement of the cart 32.

Again, with reference to Figure 1, the cart 32 also comprises a supporting assembly 40 configured equally to support at least one reel 3 or at least one platform 5.

The assembly 40 comprises a horizontal connection crossbeam 41, which is arranged adjacent to the head portion 36 in a raised position with respect to the arms 34 and the bodies 29 and which extends orthogonally to the arms 34 and to the axis 32A. The crossbeam 41 is movable in a vertical direction and in opposite directions under the thrust of a motorised guide and slide assembly 42, which is known in itself and shown schematically. The assembly 42 comprises a vertical guide 43 arranged in contact with the head portion 36 and firmly connected to the portion 36 and a slide 44 coupled to the guide 43 and actuated by a gearmotor unit 45, which is known in itself.

The assembly 40 also comprises two L-shaped forks 46, each of which comprises a vertical arm 47 coupled to a relative terminal section of the crossbeam 41 and a horizontal arm 48 adapted to being inserted in a space in the platforms 5 and having an upper supporting surface 48A of the platforms 3. The arms 48 are arranged on the opposite side of the axis 32A and the distance between them is adjustable by means of an actuation device 49 configured to move the arms 47 along the crossbeam 41.

Again, with reference to Figure 1, the assembly 40 further comprises an L-shaped central supporting body 50 of at least one reel 3. The central body 50, in turn, comprises a vertical arm 51 arranged between the arms 47 and firmly connected to the slide 44 for moving vertically in unison with the forks 46 and a horizontal arm 52 defining a cradle 53 for housing at least one reel 3 with the axis 4 thereof arranged horizontally (Figures 1,2 and 3). The cradle 53 has an axis parallel to the axes 11 and 32A and is arranged, together with the relative arm 52, below the forks 46 and inside the channel 30. Due to the way the tracks are made, the body 50 and thus the cradle 53 are free to slide inside the channels 13 and 30 so as to reach any point on the shelf 2.

In use, starting from the state shown in Figure 1, wherein the platform 26 is aligned with a shelf 2, the cart 32 is arranged above the platform 26, the forks 46 and the cradle 53 are arranged in a lowered picking/releasing position thereof and, supposing you wish to extract a platform 5, it is possible to advance the cart 32 along the track 10 and the extension thereof until the forks are inserted into the platform 5, as can be seen in Figure 2. At this point, the forks 46 are lifted and brought into a raised transport position, as shown by the dotted line in Figure 2, and the cart 32 pulled back, extracting the platform from the storage unit 1. In such a state, the cradle 53 simply advances in the channel without interfering with the platform 5.

Again, starting from the lowered picking/releasing position and wishing to extract a reel 3, instead, the cart 32 is advanced until the cradle 53 is brought below the reel 3, then the cradle 53 is raised and brought into a raised position, wherein the reel 3 is spaced apart from the fixed cradle 21, after which the cart 32 can be pulled back. If necessary, before pulling back the cart 32, the forks 46 can be moved together and brought to support the reel 3. The forks 46, always being raised with respect to the mobile cradle 53, define two lateral supporting shoulders that guarantee the stability of the reel 3 in the mobile cradle 53, especially when the reel 3 has a large diameter.

It is clear from the above how the unit 25 described equally allows reels 3 or platforms 5 to be inserted into, and removed, from the storage unit 1, without needing supporting platforms for the reels 3 and always keeping the reels 3 with the axis thereof horizontal and in a stable condition on the cart 32. The same stable condition is also guaranteed if the platform 26 is translated in a direction orthogonal to the axis of the reel 3. In fact, in such a condition, a slight lowering of the mobile cradle 53 gradually brings the reel to rest on the fixed cradle 21, further increasing the stability thereof.

From the above it is clear that the cart 32 might not be associated with the storage unit 1 or arranged on a platform 26, but may be used, for example, on a floor or on special fixed guides different from those described, to equally pick, transfer and deposit reels 3 or platforms 5 between two predetermined points of any path. In this case, some or all of the wheels of the cart 32 could be steering wheels. In addition to this, it is clear that the unit 25 might not comprise the bodies 29; in this case, the wheels could rotate inside guide channels that are different from those indicated, or simply in contact with the platform 26.

Finally, the described cart, unit and storage unit can be used to transfer and store reels of material different from that stated and platforms supporting materials identical or different from that of the reels.

## Claims

1. A motorised cart for handling products; the cart having a horizontal longitudinal axis and comprising a frame, two rows of wheels coupled to the frame on opposite lateral sides of said longitudinal axis, for rotating on a rolling surface, and picking and support means for said products, **characterised in that** said picking and support means are equally configured to pick and support at least one reel of tape material, arranged with a horizontal axis thereof, or at least one supporting platform and comprise two forks arranged parallel to, and on opposite lateral sides of, said longitudinal axis and delimited at the top by first mobile supporting surfaces of said platform and a cradle having an axis parallel to said longitudinal axis and arranged between said two forks in a lowered position with respect to the forks; said cradle having a second mobile supporting surface for said reel of tape material, said second mobile supporting surface being arranged in a lowered position with respect to said first mobile supporting surfaces; a motorised guide and slide assembly being interposed between said frame, said forks and said cradle for vertically translating and, in opposite directions, said forks and said cradle with respect to said wheels between a raised transport position and a lowered picking/releasing position.

2. The cart according to claim 1, **characterised in that** said cradle is connected to said forks in a vertically fixed position for translating in unison with said forks.

3. The cart according to claim 2, **characterised in that** it comprises a crossbeam raised with respect to said surfaces; said forks and said cradle being connected to said crossbeam in vertically fixed positions with respect to the crossbeam; said guide and slide assembly comprising a guide fixed to said frame and a motorised slide vertically mobile along said guide; said crossbeam being fixed to said slide.

4. The cart according to claim 3, **characterised in that** said forks are coupled to the crossbeam in a sliding manner and in opposite directions along an axis that is horizontal and orthogonal to said longitudinal axis; adjustment means being provided to vary a distance between said forks measured parallel to said horizontal axis.

5. The cart according to any one of the preceding claims, **characterised in that** said frame comprises a head portion and two arms, integrally connected to said head portion and extending longitudinally starting from the head portion and from opposite sides of said longitudinal axis; each of said arms carrying, coupled thereto, a relative said row of wheels; said cradle extending between said arms; said forks always being raised with respect to said arms.

6. A unit for transferring articles, the unit comprising a structure, a track having a longitudinal axis and comprising two profiled supporting bodies firmly connected to the structure on opposite sides of said longitudinal axis in mutually transversally spaced positions and delimiting, between one another, a longitudinal channel; **characterised in that** it is equally configured to pick and handle at least one reel of tape material, arranged with the horizontal axis thereof, or at least one supporting platform and comprising a motorised cart as claimed in claim 1; the cradle of the cart being arranged in said channel and each said profiled body comprising a first horizontal portion delimited by a fixed horizontal supporting surface of said platform and by an inclined portion facing the inclined portion of the other profiled body; said inclined portions defining a fixed cradle configured to define an enlargement of the mobile cradle of the cart during the transfer of said reel.

7. The unit according to claim 6, **characterised in that** said fixed horizontal surface is parallel to and lowered with respect to said first mobile surfaces of the forks and said fixed cradle extends from said relative horizontal surface downwards and towards said cradle carried by the cart.

8. The unit according to claim 6 or 7, **characterised in that** each profiled body comprises a relative horizontal guide defining a respective said rolling track for one of the rows of wheels of the cart.

9. The unit according to any one of the claims from 6 to 8, **characterised in that** it comprises handling means for moving said structure in at least one transfer direction for said products.

10. A storage unit with shelves for storing reels of tape material and pallets with a supporting platform; the storage shelf comprising a plurality of uprights, and a plurality of supporting shelves for equally supporting at least one reel of a tape material and at least one supporting platform, **characterised in that** each said shelf is configured to directly support at least one reel of tape material arranged with a horizontal axis thereof, and **in that** it comprises a unit for the transfer of articles, as claimed in claim 6; handling means being provided for moving said structure in at least one transfer direction of the articles between said shelves or from and to said storage shelf.

11. The storage unit according to claim 10, **characterised in that** each said shelf is defined by a track having a further longitudinal axis of symmetry and comprising two horizontal and parallel shaped beams and arranged on opposite sides of said further longitudinal axis; the beams being firmly connected to said uprights in mutually spaced positions and delimiting, between one another, a sliding channel; said sliding channel being configured to be engaged, in a sliding manner, by the cradle of the cart; each said beam comprising a first horizontal portion defining a flat supporting surface of said platform and a fixed inclined supporting portion of said reel; said inclined portion extending downwards and towards the inclined portion of the other beam, below said respective flat surface.

12. The storage unit according to claim 11, **characterised in that** each said beam comprises a relative guide portion defining a rolling track for one of said two rows of wheels of the cart.

13. The storage unit according to any one of the claims from 10 to 12, **characterised in that** each of said beams has a section made with a plane orthogonal to said longitudinal axis, which is geometrically and dimensionally the same as a corresponding section of the other beam and of each of the profiled bodies of said unit.

14. The storage unit according to any one of the claims from 10 to 13, **characterised in that** each of said beams and each of said profiled bodies are box-shaped bodies.
